# EUROPEAN PATENT SPECIFICATION

(11) **EP 4 173 845 B1**
(45) Date of publication and mention of the grant of the patent: **18.09.2024**
(21) Application number: 22191896.4
(22) Date of filing: 24.08.2022
(51) Int. Cl.: B60C 11/00

(54) **TIRE**
REIFEN
PNEU

(30) Priority: 01.11.2021 JP 2021178906
(43) Date of publication of application: 03.05.2023
(73) Proprietor: Sumitomo Rubber Industries, Ltd., Kobe-shi, Hyogo-ken 651-0072 (JP)
(72) Inventor: UTSUMI, Daisuke, Kobe-shi, 651-0072 (JP); ISHIGAKI, Yuichi, Kobe-shi, 651-0072 (JP)
(74) Representative: Manitz Finsterwald Patent- und Rechtsanwaltspartnerschaft mbB

(56) References cited:
- EP-B1- 2 418 103
- JP-A- 2015 199 465

## Description

### BACKGROUND OF THE INVENTION

### FIELD OF THE INVENTION

The present invention relates to a tire.

### BACKGROUND ART

Patent Document 1 below discloses a pneumatic tire, wherein the tread portion thereof comprises a first cap rubber layer and a second cap rubber layer which have loss tangents specifically defined in order to improve rolling resistance and wet braking performance of the tire.
Patent Document 1: Japanese Patent Application Publication No. 2018-002008

A tire in accordance with the preamble of claim 1 is known from EP 2 418 103 B1. A related tire is described in JP 2015 199465 A.

### SUMMARY OF THE INVENTION

### PROBLEMS TO BE SOLVED BY THE INVENTION

On the other hand, there is a demand for a tire which can exhibit good wet performance from the initial stage to the final stage of the wear life of the tread portion.
But, in the case of a tire of which tread portion comprises rubber layers having different loss tangents such as the pneumatic tire disclosed in Patent Document 1, there is a problem such that the wet performance tends to change suddenly in the middle stage of the wear life of the tread portion.

The present invention was made in view of the above circumstances, and a primary objective of the present invention is to provide a tire which can stably exhibit good wet performance from the initial stage to the final stage of the wear life of the tread portion.

### MEANS FOR SOLVING THE PROBLEMS

The object is solved by a tire having the features of claim 1. Sub-claims are directed to preferable embodiments of the invention.

According to the present invention, a tire comprises a tread portion provided with circumferential grooves which extend continuously in the tire circumferential direction to divide a first land portion and a second land portion which is located axially inside the first land portion,
each of the first land portion and the second land portion comprises a radially outermost cap tread rubber layer forming a ground contacting surface, and an intermediate tread rubber layer arranged on the radially inside of the cap tread rubber layer,
   wherein
the loss tangent δ2 of the intermediate tread rubber layer is larger than the loss tangent δ1 of the cap tread rubber layer, and
the shortest distance L2 from the ground contacting surface of the second land portion to the radially outer surface of the intermediate tread rubber layer of the second land portion is less than the shortest distance L1 from the ground contacting surface of the first land portion to the radially outer surface of the intermediate tread rubber layer of the first land portion.

According to an embodiment of the invention, the tread portion comprises a base tread rubber layer disposed on the radially inside of the intermediate tread rubber layer, and the loss tangent δb of the base tread rubber layer is smaller than the loss tangent 51 of the cap tread rubber layer.

According to an embodiment of the invention, the loss tangent δb of the base tread rubber layer is less than 0.13.

According to an embodiment of the invention, the base tread rubber layer extends in the tire axial direction with a substantially constant thickness.

According to an embodiment of the invention, the tread portion is provided with a tread reinforcing cord layer composed of cords coated with topping rubber and disposed radially inside the base tread rubber layer, and the thickness of the base tread rubber layer is 10% to 30% of the tread thickness measured from the radially outer surface of the tread portion to the radially outer surface of the tread reinforcing cord layer.

According to an embodiment of the invention, the loss tangent 51 of the cap tread rubber layer is 0.13 to 0.30.

According to an embodiment of the invention, the loss tangent δ2 of the intermediate tread rubber layer is 0.20 to 0.40.

According to an embodiment of the invention, the distance L1 is 150% to 250% of the distance L2.

### EFFECTS OF THE INVENTION

In the tire according to the present invention, therefore, owing to the different loss tangents δ1 and δ2 and the different distances L1 and L2 to the respective intermediate tread rubber layers, good wet performance is stably exhibited from the initial stage to the final stage of the tread wear life.

### BRIEF DESCRIPTION OF THE DRAWINGS

FIG. 1 is a meridian cross-sectional view of a tire as an embodiment of the present invention.
FIG. 2 is a meridian cross-sectional view enlargedly showing the second land portion and a part of the first land portion of FIG. 1.
FIG. 3 is a meridian cross-sectional view enlargedly showing another example of the first land portion and the second land portion.
FIG. 4 is a meridian cross-sectional view enlargedly showing still another example of the first land portion and the second land portion.
FIG. 5 is a graph showing a relationship between the wear amount (AW) of the tread portion and the wet braking distance (WBD) of each test tire.

### DETAILED DESCRIPTION OF THE INVENTION

The present invention can be applied to pneumatic tires for various vehicles. e.g. passenger cars, heavy vehicles such as trucks and buses, motorcycles and the like, but, in particular, suitably applied to passenger car tires.

Taking a pneumatic tire for passenger cars as an example, embodiments of the present invention will be described in detail in conjunction with accompanying drawings.

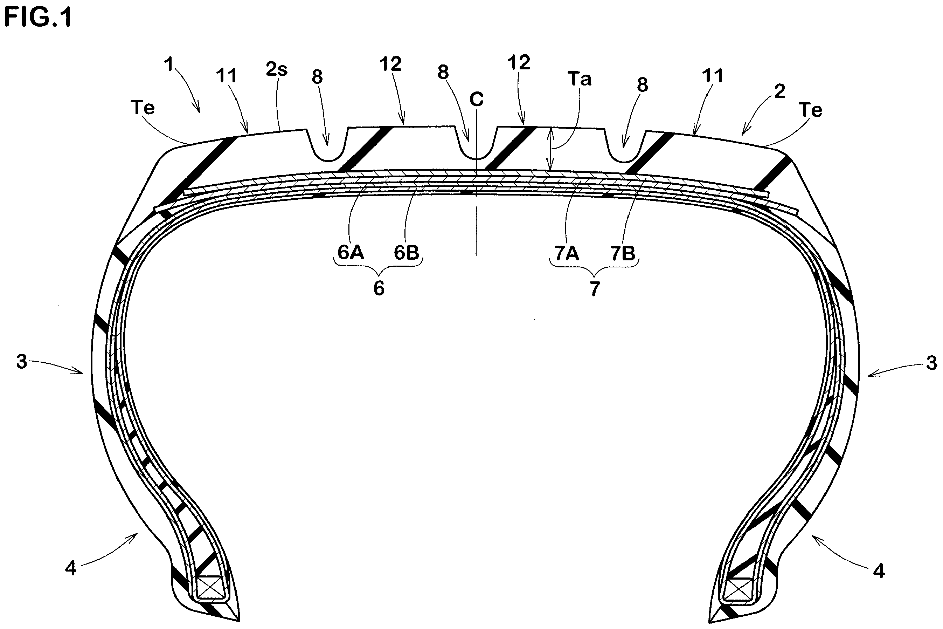

FIG. 1 is a tire meridian cross-sectional view of a pneumatic tire 1 for passenger cars as an embodiment of the present invention under a standard state of the tire 1.

In this application including specification and claims, various dimensions, positions and the like of the tire refer to those under the standard state unless otherwise noted.

In the case of a pneumatic tire for which various specifications are set by a standardization organization, the standard state is such that the tire is mounted on a standard rim, and inflated to a standard pressure, but loaded with no tire load.

In the case of a tire for which various specifications are not yet set, the standard state means a standard usage state of the tire according to the purpose of use of the tire, which is not mounted on the vehicle and loaded with no tire load. The standard wheel rim is a wheel rim officially approved or recommended for the tire by the standardization organization, i.e. JATMA (Japan and Asia), T&RA (North America), ETRTO (Europe), TRAA (Australia), STRO (Scandinavia), ALAPA (Latin America), ITTAC (India) and the like which are effective in the area where the tire is manufactured, sold or used. The standard pressure and the under-mentioned standard tire load are the maximum air pressure and the maximum tire load for the tire specified by the same organization in the Air-pressure/Maximum-load Table or similar list. For example, the standard pressure is the "maximum air pressure" in JATMA, the "Inflation Pressure" in ETRTO, the maximum pressure given in the "Tire Load Limits at Various Cold Inflation Pressures" table in TRA or the like. The standard tire load is the "maximum load capacity" in JATMA, the "Load Capacity" in ETRTO, the maximum value given in the above-mentioned table in TRA or the like.

The under-mentioned tread edges Te are the axial outermost edges of the ground contacting patch of the tire which occurs when the tire under its standard state is loaded with the standard tire load and placed on a horizontal flat surface at a camber angle of zero degree.

The pneumatic tire 1 comprises
a tread portion 2 whose radially outer surface defines the tread or the ground contacting surface 2S of the tire,
a pair of axially spaced bead portions 4 mounted on rim seats of a wheel rim,
a pair of sidewall portions 3 extending between the tread edges Te and the bead portions 4,
a carcass 6 extending between the bead portions 4 through the tread portion 2 and the sidewall portions 3, and
a tread reinforcing cord layer 7 disposed radially outside the carcass in the tread portion.

In the present embodiment of the invention, the carcass 6 is composed of two carcass plies 6A and 6B. Each of the carcass plies 6A and 6B is composed of rubberized cords arranged radially at an angle of 75 to 90 degrees with respect to the tire circumferential direction. In this example, the carcass cord is made of organic fibers.

In the present embodiment of the invention, the tread reinforcing cord layer 7 is composed of two plies 7A and 7B of reinforcing cords.
For example, each of the reinforcing plies 7A and 7B is composed of parallel reinforcing cords arranged at an angle of 10 to 45 degrees with respect to the tire circumferential direction and rubberized with topping rubber. As the reinforcing cords, organic fiber cords or steel cords may be appropriately used.

The tread portion 2 is provided with circumferential grooves 8 extending continuously in the tire circumferential direction to axially divide a first land portion 11 and a second land portion 12 which is located on the tire equator C side of the first land portion 11.

In the present embodiment of the invention, the tread portion 2 is provided with three circumferential grooves 8, and thereby, the tread portion 2 is axially divided into four land portions: a pair of axially outer first land portions 11 and a pair of axially inner second land portions 12 therebetween. The present invention is however, not limited to such a four land portion arrangement.

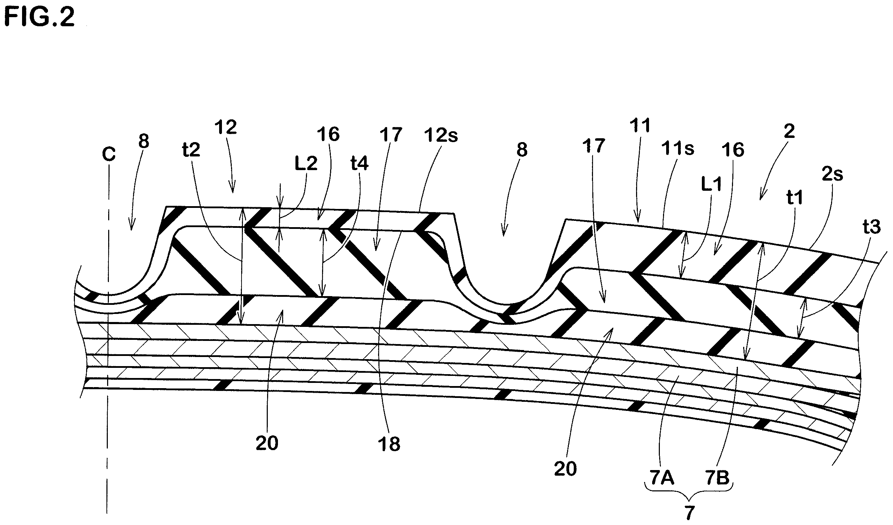

As shown in FIG. 2, each of the first land portions 11 and the second land portions 12 comprises a cap tread rubber layer 16, an intermediate tread rubber layer 17 and a base tread rubber layer 20.
The cap tread rubber layer 16 is radially outermost, and forms the ground contacting surface 2s.
The intermediate tread rubber layer 17 is disposed on the radially inside of the cap tread rubber layer 16.
The base tread rubber layer 20 is disposed on the radially inside of the intermediate tread rubber layer 17.
In the present embodiment of the invention, the tread rubber disposed on the radially outside of the tread reinforcing cord layer 7 is composed of three rubber layers: the cap tread rubber layer 16, the intermediate tread rubber layer 17 and the base tread rubber layer 20. The present invention is however, not limited to such three layer structure.
Incidentally, in FIG. 1, the tread rubber is hatched as if a single rubber layer for simplification.

It has been known that, in general, rubber having a large loss tangent can exert a large frictional force on a wet road surface.
However, in the present invention, the loss tangent (tan δ2) of the radially inner intermediate tread rubber layer 17 is set to be larger than the loss tangent (tan 51) of the radially outermost cap tread rubber layer 16.

Here, the loss tangent (tan δ) is measured according to Japanese Industrial Standard (JIS) K6394, using a dynamic mechanical characteristic analyzer (GABO EPLEXOR Series), under the following conditions: Initial strain 5%, Dynamic strain amplitude +/-1%, Frequency 10Hz, Temperature 30 degrees C, Deformation mode Tensile mode.

According to the present invention, the shortest distance L2 from the ground contacting surface 12s of the second land portion 12 to the radially outer surface of the intermediate tread rubber layer 17 of the second land portion 12 is set to be smaller than
the shortest distance L1 from the ground contacting surface 11s of the first land portion 11 to the radially outer surface of the intermediate tread rubber layer 17 of the first land portion 11. Thereby, the tire 1 according to the present invention can stably exhibit good wet performance from the initial stage to the final stage of the wear life of the tread portion 2 for the following reason.

Overall, as the wear of the tread portion 2 progresses, the intermediate tread rubber layer 17 having excellent frictional force on wet road surfaces is exposed, and thereby, the deterioration of the wet performance due to the wear of the tread portion 2 can be compensated for by exposing the intermediate tread rubber layer 17, and good wet performance is stably exhibited.

If the intermediate tread rubber layer 17 is exposed in the entire area or a wide area of the tread surface of the worn tread portion 2 at about the same time, then the change in wet performance before and after the intermediate tread rubber layer 17 is exposed becomes large. This is not desirable.

According to the present invention, since the distance L2 in the second land portion 12 is smaller than the distance L1 in the first land portion 11, the intermediate tread rubber layer 17 of the second land portion 12 is exposed, and after a while, the intermediate tread rubber layer 17 of the first land portion 11 is exposed. Therefore, the change in wet performance, namely, improvement due to the exposure of the intermediate tread rubber layer 17 becomes gradual.
On the other hand, as the wear progresses, tread grooves are gradually decreased in depth and volume, which affects the wet performance. But, the deterioration of the wet performance due to the gradual decrease in the groove depth and volume is compensated by the gradual exposure of the intermediate tread rubber layer 17.

For this reason, the tire 1 according to the present invention can exhibit good wet performance stably from the initial stage to the final stage of the wear life of the tread portion 2.

The loss tangent (tan δ1) of the cap tread rubber layer 16 is preferably set to be not less than 0.13, more preferably not less than 0.15, still more preferably not less than 0.18, but not more than 0.30, more preferably not more than 0.25, still more preferably not more than 0.22.
Such cap tread rubber layer 16 can exhibit steering stability on dry road surfaces (hereinafter, simply referred to as "steering stability") and wet performance in a well-balanced manner in the initial stage of the tread wear life.

It is preferable that the loss tangent (tan δ2) of the intermediate tread rubber layer 17 is set to be not less than 0.20, more preferably not less than 0.25, still more preferably not less than 0.28, but not more than 0.40, more preferably not more than 0.35, still more preferably not more than 0.32 in order to improve steering stability and wet performance when the tread portion 2 is worn.

If the difference between the loss tangent (tan 51) and the loss tangent (tan δ2) is small, it is difficult to derive the above-mentioned effect. If the difference is large, then the separation failure is likely to occur at the boundary between the cap tread rubber layer 16 and the intermediate tread rubber layer 17.
From such a viewpoint, it is preferable that the loss tangent (tan δ2) is 1.2 to 2.5 times, more preferably 1.5 to 2.0 times the loss tangent (tan δ1).

Each of the cap tread rubber layer 16 and the intermediate tread rubber layer 17 has a substantially constant thickness except for the vicinity of each circumferential groove 8. Thereby, their separation at the boundary of these rubber layers can be suppressed.
The above-said vicinity of the circumferential groove 8 may include a range of not more than 50% of the groove width of the circumferential groove 8 at the groove top, from each of the groove walls toward the both sides of the circumferential groove 8.
The expression "substantially constant thickness" means that the difference between the maximum value and the minimum value of the thickness is not more than 5% of the maximum value.

The distance L1 in the first land portion 11 is preferably 35% to 55%, more preferably 40 to 50% of the tread thickness t1 measured in the first land portion 11 from the radially outer surface of the tread reinforcing cord layer 7 to the radially outer surface of the tread portion 2.

The distance L2 of the second land portion 12 is preferably 10% to 30%, more preferably 15% to 25% of the tread thickness t2 measured in the second land portion 12 from the radially outer surface of the tread reinforcing cord layer 7 to the radially outer surface of the tread portion 2.

Further, the distance L1 is preferably not less than 150%, more preferably not less than 180%, but preferably not more than 250%, more preferably not more than 220% of the distance L2. Thereby, the wet performance is more stably exhibited.

In the first land portion 11, the thickness t3 of the intermediate tread rubber layer 17 is preferably set in a range from 30% to 50% of the above-said tread thickness t1.
In the second land portion 12, the thickness t4 of the intermediate tread rubber layer 17 is preferably set in a range from 50% to 70% of the tread thickness t2.
The present invention is however, not limited to such thickness ranges.

The tread portion 2 includes the base tread rubber layer 20 disposed on the radially inside of the intermediate tread rubber layer 17.
The loss tangent (tan δb) of the base tread rubber layer 20 is smaller than the loss tangent (tan 51) of the cap tread rubber layer 16. Specifically, the loss tangent (tan δb) is less than 0.13. Such base tread rubber layer 20 helps to suppress excessive heat generation of the tread portion 2.

The base tread rubber layer has a substantially constant thickness except for the vicinity of the circumferential groove 8. The meaning of the expression "substantially constant thickness" is as explained above.
The thickness of the base tread rubber layer 20 is preferably set in a range from 10% to 30% of the tread thickness from the radially outer surface of the tread reinforcing cord layer 7 to the radially outer surface of the tread portion 2.

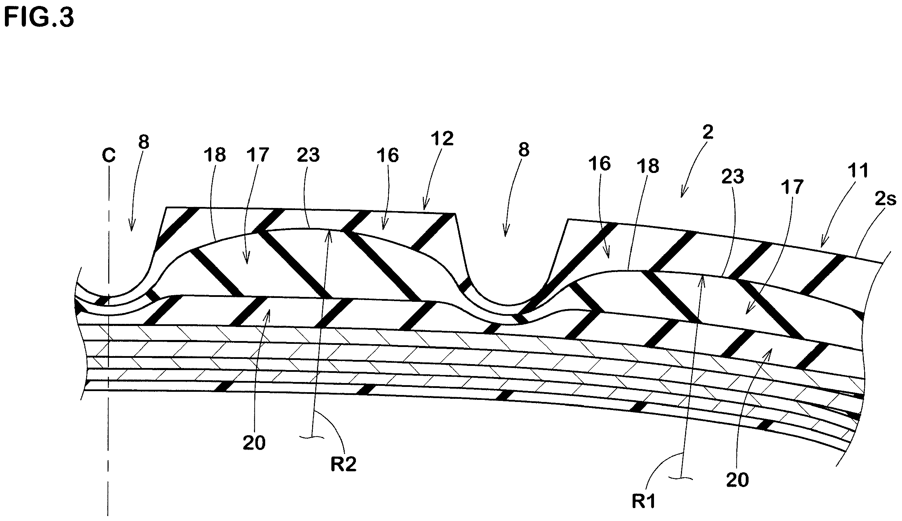

In the present embodiment of the invention, the boundary 18 between the cap tread rubber layer 16 and the intermediate tread rubber layer 17 extends parallel to the ground contacting surface, except for the vicinity of each circumferential groove 8.
The present invention is however, not limited to such example. For example, FIG. 3 shows another example of the first land portion 11 and the second land portion 12, wherein the boundary 18 (except for portions in the vicinities of the circumferential grooves 8) does not extend parallel to the ground contacting surface 2s of the tread portion 2. More specifically, in each of the first land portion 11 and the second land portion 12, the boundary 18 comprises a radially outwardly protruding portion 23, and
the radial distance from the radially outer surface of the tread portion 2 to the protruding portion 23 of the boundary 18 is increased toward both sides in the tire axial direction from the radially outwardly most protruding position.
Accordingly, as the wear of the tread portion progresses, the intermediate tread rubber layer 17 is gradually increased in occupied area in the tread surface, therefore, the wet performance can be more stably exhibited.

It is preferable that the radius of curvature R2 of the boundary 18 in the second land portion 12 is smaller than the radius of curvature R1 of the boundary 18 in the first land portion 11. As a result, it is possible to increase the amount of wear required for the intermediate tread rubber layer 17 to be completely exposed in the second land portion 12, while suppressing the separation of the rubber layers at the boundary 18.

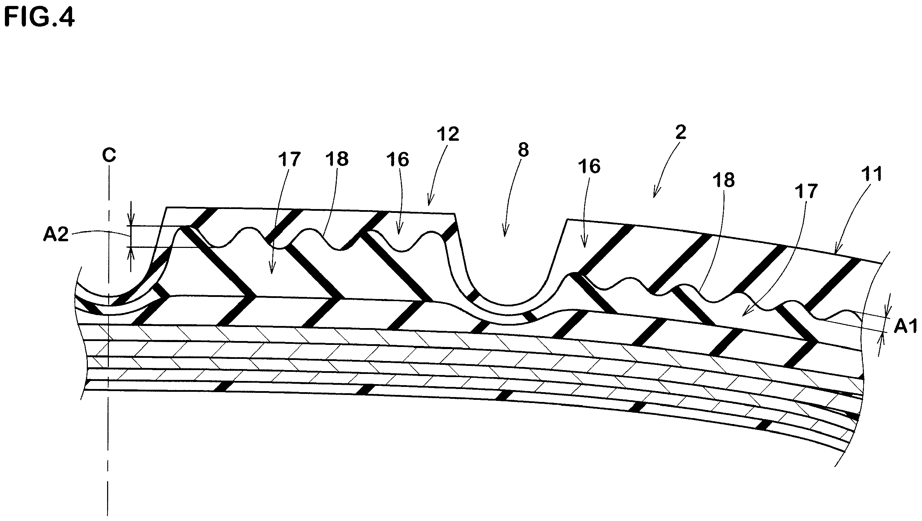

FIG. 4 shows still another example of the first land portion 11 and the second land portion 12, wherein the boundary 18 is undulated. Specifically, in the tire meridian cross section, the boundary 18 extends in the tire axial direction, while oscillating in the tire radial direction, thus, showing a wavy shape.
In this example, too, the intermediate tread rubber layer 17 is gradually increased in occupied area in the tread surface, as the wear of the tread portion progresses, and thereby, the wet performance can be more stably exhibited.
In addition, the substantial length of the boundary 18 is increased, which helps to suppress the separation between the rubber layers at the boundary 18.

As shown in FIG. 4, the amplitude A2 in the tire radial direction of the boundary 18 in the second land portion 12 is preferably larger than the amplitude A1 in the tire radial direction of the boundary 18 in the first land portion 11. Thereby, it is possible to increase the amount of wear required for the intermediate tread rubber layer 17 to be completely exposed in the second land portion 12.

While detailed description has been made of preferable embodiments of the present invention, the present invention can be embodied in various forms within the scope of the appended claims.

### Comparison tests

Based on the structure shown in FIG. 1, pneumatic tires of size 235/65R16C were experimentally manufactured as test tires including working example Ex.1, and comparative examples Ref.1 and Ref.2.

Specifications of the test tires are shown in Table 1.

In the comparative example Ref.1, the loss tangent (tan 51) of the cap tread rubber layer was larger than the loss tangent (tan δ2) of the intermediate tread rubber layer, and the distance L1 was equal to the distance L2.

In the comparative example Ref.2, the loss tangent (tan 51) of the cap tread rubber layer was smaller than the loss tangent (tan δ2) of the intermediate tread rubber layer, and the distance L1 was equal to the distance L2.

The tread thickness t1 in the first land portion and the tread thickness t2 in the second land portion were substantially the same in each test tire and also for all test tires.

All test tires had substantially the same structures except for the loss tangents, distances and thicknesses shown in Table 1.

**Table 1**

| Tire | Ref.1 | Ref. 2 | Ex.1 |
|---|---|---|---|
| cap tread rubber layer tan δ1 | 0.35 | 0.20 | 0.20 |
| intermediate tread rubber layer tan δ2 | 0.20 | 0.35 | 0.35 |
| distance L1 / tread thickness t1 (%) | 40 | 40 | 40 |
| distance L2 / tread thickness t2 (%) | 40 | 40 | 20 |

For each test tire, the relationship between the amount of wear (AW) of the tread portion and the wet braking distance (WBD) was investigated.

The test tire was mounted on a standard rim (size 16x7.0J) and attached to a test vehicle (3000cc rear-wheel-drive commercial vehicle), and the wet braking distance (WBD) was measured using the test vehicle.

The braking distance was measured by applying full brake when the test vehicle was running at a speed of 65 km/h on an asphalt road surface of a tire test course, covered with 1.5 mm depth water.

Such measurement was carried out many times from a state in which the amount of wear = 0% (that is, a new tire state) to a state in which the amount of wear = 100% (that is, the tread wear reached to the wear indicator).

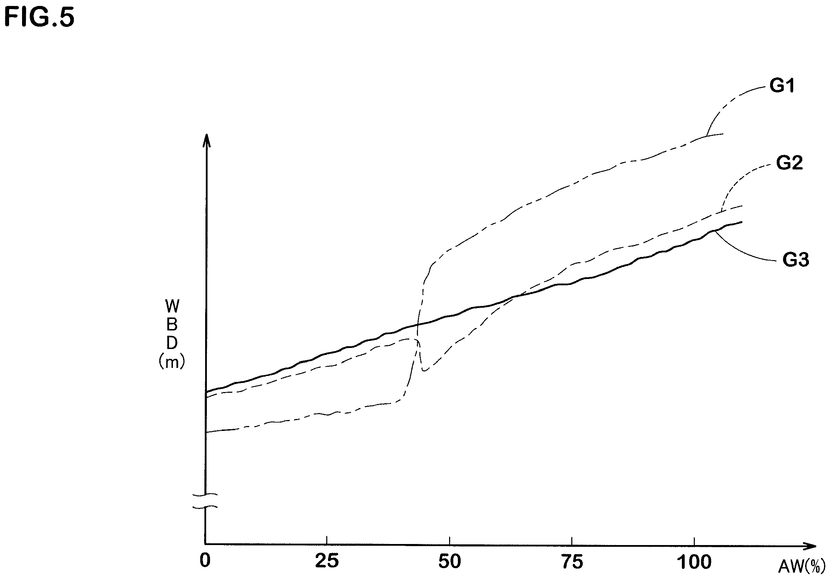

The results are shown in FIG. 5 as a graph, wherein the horizontal axis is the amount of wear (AW) of the tread portion, and the vertical axis is the wet braking distance (WBD). Needless to say, the smaller wet braking distance is better.

In FIG. 5, the graph G1 shows the WBD-AW relationship of the comparative example Ref.1, the graph G2 shows the WBD-AW relationship of the comparative example Ref.2 and the graph G3 shows the WBD-AW relationship of the working example Ex.1. As shown in FIG. 5, in each test tire, as the amount of wear (AW) of the tread portion increased, the drainage property of the circumferential grooves was decreased and the wet braking distance (WBD) was increased.

In the comparative example Ref.1, the wet braking distance (WBD) was small in the initial stage of tread wear. However, when the tread portion was worn and the intermediate tread rubber layer having the smaller loss tangent was exposed, the wet braking distance (WBD) changed abruptly and increased. Then, the wet braking distance (WBD) was gradually increased as the amount of wear (AW) increased.

In the comparative example Ref.2, the large abrupt change of the wet braking distance was suppressed as compared with the comparative example Ref.1, but a smaller abrupt change still existed because the intermediate tread rubber layer appeared in the entire tread surface within a short period of time.

In the working example Ex.1, the wet braking distance (WBD) was changed linearly with respect to the change in the amount of wear (AW) of the tread portion without the abrupt changes as in the comparative examples.

Thus, it was confirmed that the tire according to the present invention can stably exhibit good wet performance until the end of the tread wear life.

### DESCRIPTION OF THE REFERENCE SIGNS

2 tread portion
8 circumferential groove
11 first land portion
12 second land portion
16 cap tread rubber layer
17 intermediate tread rubber layer
C tire equator

## Claims

1. A tire (1) comprising a tread portion (2) provided with circumferential grooves (8) which extend continuously in the tire circumferential direction to divide a first land portion (11) and a second land portion (12) which is located axially inside the first land portion (11),
wherein
each of the first land portion (11) and the second land portion (12) comprises a radially outermost cap tread rubber layer (16) forming a ground contacting surface (2s), and an intermediate tread rubber layer (17) arranged on the radially inside of the cap tread rubber layer (16); and
the shortest distance L2 from the ground contacting surface (12s) of the second land portion (12) to the radially outer surface of the intermediate tread rubber layer (17) of the second land portion (12) is less than the shortest distance L1 from the ground contacting surface of the first land portion (11s) to the radially outer surface of the intermediate tread rubber layer (17) of the first land portion
**characterized in that**
the loss tangent δ2 of the intermediate tread rubber layer (17) is larger than the loss tangent 51 of the cap tread rubber layer (16),
the loss tangent δ is measured according to Japanese Industrial Standard (JIS) K6394 at an initial strain of 5%, at a dynamic strain amplitude of +/-1%, at a frequency of 10Hz, at a temperature of 30° Celsius, under tensile deformation.

2. The tire (1) according to claim 1, wherein
the tread portion (2) comprises a base tread rubber layer (20) disposed on the radially inside of the intermediate tread rubber layer (17), and
the loss tangent δb of the base tread rubber layer (20) is smaller than the loss tangent 51 of the cap tread rubber layer (16).

3. The tire (1) according to claim 2, wherein
the loss tangent δb of the base tread rubber layer (20) is less than 0.13.

4. The tire (1) according to claim 2 or 3, wherein
the base tread rubber layer (20) extends in the tire axial direction with a substantially constant thickness.

5. The tire (1) according to any one of claims 2 to 4, wherein
the tread portion (2) is provided with a tread reinforcing cord layer (7) composed of cords coated with topping rubber and disposed radially inside the base tread rubber layer (20), and
the thickness of the base tread rubber layer is 10% to 30% of the tread thickness measured from the radially outer surface of the tread portion (2) to the radially outer surface of the tread reinforcing cord layer (7).

6. The tire (1) according to any one of claims 1 to 5, wherein
the loss tangent 51 of the cap tread rubber layer (16) is 0.13 to 0.30.

7. The tire (1) according to any one of claims 1 to 6, wherein
the loss tangent δ2 of the intermediate tread rubber layer (17) is 0.20 to 0.40.

8. The tire (1) according to any one of claims 1 to 7, wherein
the shortest distance L1 is 150% to 250% of the shortest distance L2.

## Patentansprüche

1. Reifen (1), umfassend einen Laufflächenabschnitt (2), der mit Umfangsrillen (8) versehen ist, die sich kontinuierlich in der Reifenumfangsrichtung erstrecken, um einen ersten Landabschnitt (11) und einen zweiten Landabschnitt (12), der sich axial innen von dem ersten Landabschnitt (11) befindet, abzuteilen,
wobei
ein jeder von dem ersten Landabschnitt (11) und dem zweiten Landabschnitt (12) eine radial äußerste Decklaufflächengummischicht (16), die eine Bodenkontaktfläche (2s) bildet, und eine Zwischenlaufflächengummischicht (17), die auf der radialen Innenseite der Decklaufflächengummischicht (16) angeordnet ist, umfasst; und
der kürzeste Abstand L2 von der Bodenkontaktfläche (12s) des zweiten Landabschnitts (12) zu der radialen Außenfläche der Zwischenlaufflächengummischicht (17) des zweiten Landabschnitts (12) kleiner als der kürzeste Abstand L1 von der Bodenkontaktfläche des ersten Landabschnitts (11s) zu der radialen Außenfläche der Zwischenlaufflächengummischicht (17) des ersten Landabschnitts ist,
**dadurch gekennzeichnet, dass**
der Verlusttangens δ2 der Zwischenlaufflächengummischicht (17) größer als der Verlusttangens δ1 der Decklaufflächengummischicht (16) ist, wobei der Verlusttangens δ gemäß dem Japanischen Industriestandard (JIS) K6394 bei einer Anfangsdehnung von 5%, bei einer dynamischen Dehnungsamplitude von +/-1%, bei einer Frequenz von 10Hz, bei einer Temperatur von 30° Celsius unter Zugverformung gemessen ist.

2. Reifen (1) nach Anspruch 1, wobei
der Laufflächenabschnitt (2) eine Basislaufflächengummischicht (20) umfasst, die auf der radialen Innenseite der Zwischenlaufflächengummischicht (17) angeordnet ist, und
der Verlusttangens δb der Basislaufflächengummischicht (20) kleiner als der Verlusttangens δ1 der Decklaufflächengummischicht (16) ist.

3. Reifen (1) nach Anspruch 2, wobei
der Verlusttangens δb der Basislaufflächengummischicht (20) kleiner als 0,13 ist.

4. Reifen (1) nach Anspruch 2 oder 3, wobei
die Basislaufflächengummischicht (20) sich in der Reifenaxialrichtung mit einer im Wesentlichen konstanten Dicke erstreckt.

5. Reifen (1) nach einem der Ansprüche 2 bis 4, wobei
der Laufflächenabschnitt (2) mit einer Laufflächenverstärkungskordschicht (7) versehen ist, die aus Korden besteht, die mit Deckgummi beschichtet sind und radial innerhalb der Basislaufflächengummischicht (20) angeordnet sind, und
die Dicke der Basislaufflächengummischicht 10% bis 30% der Laufflächendicke, gemessen von der radialen Außenfläche des Laufflächenabschnitts (2) zu der radialen Außenfläche der Laufflächenverstärkungskordschicht (7), beträgt.

6. Reifen (1) nach einem der Ansprüche 1 bis 5, wobei
der Verlusttangens δ1 der Decklaufflächengummischicht (16) 0,13 bis 0,30 beträgt.

7. Reifen (1) nach einem der Ansprüche 1 bis 6, wobei
der Verlusttangens δ2 der Zwischenlaufflächengummischicht (17) 0,20 bis 0,40 beträgt.

8. Reifen (1) nach einem der Ansprüche 1 bis 7, wobei
der kürzeste Abstand L1 150 % bis 250 % des kürzesten Abstands L2 beträgt.

## Revendications

1. Pneumatique (1) comprenant une portion formant bande de roulement (2) dotée de rainures circonférentielles (8) qui s'étendent en continu dans la direction circonférentielle du pneumatique pour diviser une première portion en relief (11) et une seconde portion en relief (12) qui est située axialement à l'intérieur de la première portion en relief (11),
dans lequel
chacune de la première portion en relief (11) et de la seconde portion en relief (12) comprend une couche de caoutchouc de bande de roulement de chape radialement la plus à l'extérieur (16) formant une surface de contact au sol (2s), et une couche de caoutchouc de bande de roulement intermédiaire (17) agencée sur la partie radialement intérieure de la couche de caoutchouc de bande de roulement de chape (16) ; et
la distance la plus courte L2 depuis la surface de contact au sol (12s) de la seconde portion en relief (12) jusqu'à la surface radialement extérieure de la couche de caoutchouc de bande de roulement intermédiaire (17) de la seconde portion en relief (12) est inférieure à la distance la plus courte L1 depuis la surface de contact au sol de la première portion en relief (11s) jusqu'à la surface radialement extérieure de la couche de caoutchouc de bande de roulement intermédiaire (17) de la première portion en relief,
**caractérisé en ce que**
la tangente de perte 52 de la couche de caoutchouc de bande de roulement intermédiaire (17) est plus grande que la tangente de perte 51 de la couche de caoutchouc de bande de roulement de chape (16),
la tangente de perte δ étant mesurée selon la norme industrielle japonaise (JIS) K6394 à une contrainte initiale de 5 %, une amplitude de contrainte dynamique de ± 1 %, une fréquence de 10 Hz, une température de 30° Celsius, dans un mode de déformation en traction.

2. Pneumatique (1) selon la revendication 1, dans lequel
la portion formant bande de roulement (2) comprend une couche de caoutchouc de bande de roulement de base (20) disposée sur la partie radialement intérieure de la couche de caoutchouc de bande de roulement intermédiaire (17), et
la tangente de perte δb de la couche de caoutchouc de bande de roulement de base (20) est plus petite que la tangente de perte 51 de la couche de caoutchouc de bande de roulement de chape (16).

3. Pneumatique (1) selon la revendication 2, dans lequel
la tangente de perte δb de la couche de caoutchouc de bande de roulement de base (20) est inférieure à 0,13.

4. Pneumatique (1) selon la revendication 2 ou 3, dans lequel
la couche de caoutchouc de bande de roulement de base (20) s'étend dans la direction axiale du pneumatique avec une épaisseur sensiblement constante.

5. Pneumatique (1) selon l'une quelconque des revendications 2 à 4, dans lequel
la portion formant bande de roulement (2) est dotée d'une couche de câblés de renforcement de bande de roulement (7) composée de câblés revêtus avec un caoutchouc d'enrobage et disposée radialement à l'intérieur de la couche de caoutchouc de bande de roulement de base (20), et
l'épaisseur de la couche de caoutchouc de bande de roulement de base est 10 % à 30 % de l'épaisseur de la bande de roulement mesurée depuis la surface radialement extérieure de la portion formant bande de roulement (2) jusqu'à la surface radialement extérieure de la couche de câblés de renforcement de bande de roulement (7).

6. Pneumatique (1) selon l'une quelconque des revendications 1 à 5, dans lequel
la tangente de perte 51 de la couche de caoutchouc de bande de roulement de chape (16) est de 0,13 à 0,30.

7. Pneumatique (1) selon l'une quelconque des revendications 1 à 6, dans lequel
la tangente de perte 52 de la couche de caoutchouc de bande de roulement intermédiaire (17) est de 0,20 à 0,40.

8. Pneumatique (1) selon l'une quelconque des revendications 1 à 7, dans lequel
la distance la plus courte L1 est 150 % à 250 % de la distance la plus courte L2.
